# EUROPÄISCHE PATENTSCHRIFT

(11) **EP 3 289 669 B1**
(45) Veröffentlichungstag und Bekanntmachung des Hinweises auf die Patenterteilung: **12.06.2019**
(21) Anmeldenummer: 16714441.9
(22) Anmeldetag: 06.04.2016
(51) Int. Cl.: H02K 5/10, H02K 9/19, H02K 1/20, H02K 5/15, H02K 9/193

(54) **GEHÄUSELOSE ELEKTRISCHE MASCHINE**
UNENCLOSED ELECTRICAL MACHINE
MACHINE ÉLECTRIQUE SANS BOÎTIER

(30) Priorität: 29.04.2015 DE 102015207865
(43) Veröffentlichungstag der Anmeldung: 07.03.2018
(73) Patentinhaber: Continental Automotive GmbH, 30165 Hannover (DE)
(72) Erfinder: FRÖHLICH, Holger, 13127 Berlin (DE); GÜRTLER, Sönke, 14169 Berlin (DE)
(86) Internationale Anmeldenummer: PCT/EP2016/057496
(87) Internationale Veröffentlichungsnummer: WO 2016/173812

(56) Entgegenhaltungen:
- EP-A1- 0 581 966
- EP-A2- 1 753 113
- AT-B- 412 311
- JP-A- H0 787 711

## Beschreibung

### Technisches Gebiet:

Die Erfindung betrifft eine elektrische Maschine, die insbesondere als ein Antriebsaggregat eines Hybridelektro-/Elektrofahrzeugs verwendet wird.

### Stand der Technik:

Elektrische Maschinen, insbesondere für eine Anwendung als Antriebsaggregat eines Hybridelektro-/Elektrofahrzeugs, insbesondere deren Statoren, erzeugen beim Betrieb aufgrund der Verlustleistung Abwärme. Diese Abwärme kann zu einem Leistungseibruch bei den elektrischen Maschinen führen und muss daher zeitnah zu deren Entstehung abgeführt werden. Hierzu werden die elektrischen Maschinen in Gehäusen untergebracht, die mit Kühlkanälen versehen sind. Beim Betrieb der elektrischen Maschinen fließt eine Kühlflüssigkeit, wie z. B. ein Kühlwasser, durch die Kühlkanäle und führt die in den elektrischen Maschinen entstandene Abwärme ab.

Wie bei allen technischen Vorrichtungen, insbesondere bei Komponenten von Hybridelektro-/Elektrofahrzeugen, gibt es die allgemeine Anforderung, die elektrischen Maschinen kompakter, gewichtssparender und zudem kostengünstiger zu bauen.

Damit besteht die Aufgabe der vorliegenden Erfindung darin, eine Möglichkeit aufzuzeigen, mit der eine elektrische Maschine kompakter, leichter und zudem kostengünstiger hergestellt werden kann.

Aus der EP 0 581 966 A1 ist ein Motor mit einem Stator und einer Kühleinrichtungen bekannt, wie er im Oberbegriff des Patentanspruchs 1 beschrieben ist.

Die EP 1753113 A2 beschreibt einen Statorverguss. Wobei vorgesehen ist, dass eine mittels eines Spritzguss- oder Spritzgusspressverfahrens aufgebrachte Beschichtung aus einem duroplastischen Werkstoff wenigstens Spulenelemente und Elektronikkomponenten eines Elektromotors zumindest teilweise sterilisationsfest umhüllt.

### Beschreibung der Erfindung:

Diese Aufgabe wird durch den abhängigen Anspruch 1 gelöst. Vorteilhafte Ausgestaltungen sind Gegenstand der Unteransprüche.

Gemäß der Erfindung wird eine gehäuselose elektrische Maschine bereitgestellt. Die elektrische Maschine umfasst einen Stator, der einen (im Wesentlichen zylinderförmigen) Hohlraum (im Wesentlichen hohlzylinderförmig) umlaufend ausgebildet ist, wobei der Hohlraum vorzugsweise zur Aufnahme eines Rotors der elektrischen Maschine vorgesehen ist. Der Stator weist eine Isolierummantelung auf, die eine äußere Umfangsoberfläche sowie zumindest eine Seitenfläche des Stators hautartig umschließt und den Stator von der Umgebung mediendicht abdichtet. Die elektrische Maschine umfasst ferner einen Lagerschild, der an der Seitenfläche des Stators angeordnet ist und den Hohlraum einseitig abgrenzt. Die elektrische Maschine umfasst außerdem zumindest eine Dichtanordnung, die zwischen der Isolierummantelung und dem Lagerschild angeordnet ist und eine Abdichtung ausbildet, die den Hohlraum von der Umgebung mediendicht abdichtet. Die Abdichtung ist dabei vorzugsweise formschlüssig bzw. kraftschlüssig ausgebildet.

Damit umfasst die elektrische Maschine anstelle eines Gehäuses eine Isolierummantelung, die den Stator von der Umgebung räumlich isoliert. Dabei ist die Isolierummantelung in Form von einer mediendichten, dennoch thermisch leitenden hautartigen Schicht ausgebildet, die die äußere Umfangsoberfläche und zumindest eine Seitenfläche bzw. die beiden Seitenflächen des Stators bedeckt und somit den Stator von der Umgebung mediendicht isoliert. Diese Isolierummantelung IU dabei ausreichend dick, um den Stator mediendicht zu isolieren, und zugleich genügend dünn, um die Abwärme, die beim Betrieb der elektrischen Maschine im Stator entsteht, von dem Stator effizient ableiten zu können.

Die Isolierummantelung ist im Vergleich zu einem konventionellen Gehäuse wesentlich bauraum- und gewichtssparender und zudem günstiger herstellbar.

Insbesondere bildet die Isolierummantelung eine dünne, gleichmäßige, hautähnliche Schicht, die an bzw. auf dem Stator anhaftet und somit mit dem Stator körperlich verbunden ist. Die Isolierummantelung ermöglicht somit eine gleichmäßige Isolierung und zugleich eine homogene Kühlung des Stators.

Die Isolierummantelung kann dabei in einem Spritzgießverfahren hergestellt werden. Das Spritzgießverfahren erlaubt die Herstellung großflächiger dünner isolierender Beschichtungen. Mit dem Spritzgießverfahren lässt sich die Isolierummantelung kostengünstig an dem Stator anbringen, welche verbesserte Isolier- und Kühleigenschaften aufweist.

Alternativ kann die Isolierummantelung in einem (sonstigen) Beschichtungsverfahren, wie z. B. Lackieren (Spritzlackieren, Tauchlackieren) oder Wirbelsintern, hergestellt werden.

Dadurch, dass der Stator nun lediglich über die dünne Isolierummantelung als Wärmesenke mit der Umgebung thermisch verbunden ist, kann die Abwärme, die im Stator entsteht, über die (dünne) Isolierummantelung schneller und somit effizienter abgeführt werden.

Die insb. form- oder kraftschlüssige Dichtanordnung zwischen dem Stator und dem Lagerschild ermöglicht ohne zusätzliche Vorspannung eine mediendichte Abdichtung für den Hohlraum, in dem beispielsweise der Rotor der elektrischen Maschine angeordnet ist.

Die Isolierummantelung kann auch aufwendige Nutisolierung des Stators ersetzen und ermöglicht somit eine weitere Einsparung bei der elektrischen Maschine.

Damit ist eine gehäuselose elektrische Maschine bereitgestellt, die kostengünstig herstellbar ist, einen kleinen Bauraum beansprucht und zudem leichter als konventionelle elektrische Maschinen (mit konventionellen Gehäusen) gleicher Leistungsklasse ist.

Erfindungsgemäß umfasst die Dichtanordnung zumindest einen ersten Vorsprung, der an dem Lagerschild sich in der Umfangsrichtung des Hohlraums (beispielsweise kreisringförmig) erstreckend ausgebildet ist. Der erste Vorsprung ragt in die Isolierummantelung (an der Seitenfläche des Stators) hinein und bildet somit mit der Isolierummantelung die formschlüssige mediendichte Abdichtung für den Hohlraum aus.

Alternativ oder zusätzlich zu dem ersten Vorsprung weist die Dichtanordnung vorzugsweise auch eine Ausnehmung auf, die an dem Lagerschild sich in der Umfangsrichtung des Hohlraums (beispielsweise kreisringförmig) erstreckend ausgebildet ist. In dieser Ausnehmung ragt die Isolierummantelung bzw. ein ringförmig ausgebildeter Vorsprung an der Isolierummantelung hinein und bildet somit mit der Ausnehmung die formschlüssige mediendichte Abdichtung für den Hohlraum aus.

Der erste Vorsprung weist vorzugsweise eine schneidringartige Kontur auf, die sich in die Isolierummantelung hinein gräbt und somit die formschlüssige mediendichte Verbindung zwischen dem Stator und dem Lagerschild herstellt. Der erste Vorsprung kann in einem Formgebungsvorgang des Lagerschildes an dem Lagerschild geformt werden. Der Formschluss wird durch Verschrauben bzw. Verspannen des Lagerschildes samt dem ersten Vorsprung mit dem mit der Isolierummantelung versehenen Stator hergestellt. Dabei wird die Oberflächenrelaxation der Isolierummantelung gezielt genutzt, um den Formschluss herzustellen. Beim Verschrauben bzw. Verspannen des Lagerschildes mit dem Stator dringt die schneidringartige Kontur des ersten Vorsprungs in die Isolierummantelung ein und führt zur Oberflächenrelaxation bei der Isolierummantelung, wodurch zwischen dem Stator und dem Lagerschild der Formschluss entsteht.

Alternativ oder zusätzlich zu dem ersten Vorsprung weist die Dichtanordnung eine Formdichtung, insbesondere eine Elastomerformdichtung, beispielsweise aus Polyarylatkautschuk (Polyacrylat-Kautschuk), auf, die in einer sich in Umfangsrichtung des Hohlraums (beispielsweise kreisringförmig) erstreckenden Vertiefung an dem Lagerschild angeordnet ist. Dabei drückt die Innenwand der Vertiefung die Formdichtung in Richtung der Isolierummantelung, so dass die Formdichtung gemeinsam mit der Isolierummantelung die formschlüssige mediendichte Abdichtung für den Hohlraum ausbildet.

Die Verwendung dieser Formdichtung erfolgt vorzugsweise unter Einwirkung eines Kraftnebenschlusses. Die Formdichtung verfügt über ein hohes Abdichtpotential bei einem geringen Kraftbedarf. Dabei weist die Formdichtung spezifisch auf die Anwendung abgestimmte Profilgeometrien, wie z. B. einen im Wesentlichen rechteckigen Querschnitt mit an mehreren Seiten geformten domförmigen Wölbungen, die eine optimale Abdichtung garantieren.

Die Isolierummantelung enthält vorzugsweise einen thermoplastischen und wärmeleitenden Kunststoff, der in verschiedenen Varianten kostengünstig erhältlich sind. Insbesondere besteht die Isolierummantelung größtenteils, speziell vollständig, aus einem wärmeleitenden Kunststoff, wie z. B. einem thermoplastischen oder duroplastischen Kunststoff.

Mit dem Spritzgießverfahren wird der Stator kostengünstig isoliert. Hier wird das Blechpaket des Stators (vorzugsweise vorgewärmt) in ein Werkzeug eingefügt und selektiv mit Kunststoff beschichtet. Durch das Spritzgießen werden die Bänder, Folien usw. ersetzt, die sonst bei der herkömmlichen Stator-Isolation verwendet werden. Folglich kann das Spritzgießverfahren weitere Kosteneinsparungen und Produktionsvorteile bieten. Ein Blechpaket aus Stahl wird als Einlegeteil verwendet. Das Spritzgießen bietet zudem Schlitz- und Endisolierungen, Klemmenhalterungen, Konturstützen, Führungsschlitze und Kühlkanäle für die Wicklung und alles in einem einzigen Herstellungsschritt.

Vorzugsweise weist der Stator einen ersten Kühlkanal auf, der zum Durchleiten einer Kühlflüssigkeit zur Kühlung des Stators dient. Der erste Kühlkanal weist eine erste Öffnung auf, die an der Seitenfläche des Stators ausgebildet ist und durch die die Kühlflüssigkeit in den ersten Kühlkanal hinein- bzw. hinausströmen kann. Die zuvor beschriebene Dichtanordnung dichtet den ersten Kühlkanal bzw. die erste Öffnung von der Umgebung mediendicht ab.

Die in dem Körper des Stators ausgebildeten Kühlkanäle ermöglichen eine Flüssigkeitskühlung direkt dort, wo die Abwärme entsteht. Eine derartige direkte Kühlung ist effizienter als eine Kühlung des Stators über in einer Gehäusewand eines Gehäuses der elektrischen Maschine ausgebildete Kühlkanäle, die einen effizienten Wärmeübergang von dem Stator zu der Gehäusewand voraussetzt.

Vorzugsweise weist der Stator an einer Innenwand des ersten Kühlkanals eine Isolierschicht auf, die Innenwand des Kühlkanals hautartig bedeckt und somit den Kühlkanal von der Umgebung bzw. von dem Körper (Blechpaket) des Stators mediendicht abdichtet.

Die Isolierschicht enthält vorzugsweise ebenfalls einen thermoplastischen und wärmeleitenden Kunststoff, wie z. B. eine Duroplaste oder eine Thermoplast, der durch Umspritzen an bzw. auf der Innenwand des ersten Kühlkanals beschichtet ist.

Die Isolierschicht ist vorzugsweise mit der Isolierummantelung einstückig ausgebildet. Insbesondere sind die Isolierschicht und die Isolierummantelung in einem und demselben Spritzgießvorgang aus einer und derselben Gießmasse und somit aus einem und demselben thermoplastischen und wärmeleitenden Kunststoff ausgebildet.

Das Spritzgießverfahren ermöglicht die Herstellung der Isolierummantelung und Isolierschicht, die großflächig, dünn und zusammenhängend (ohne Risse) ausgebildet werden können.

Die Isolierschicht weist vorzugsweise eine Anzahl von in den ersten Kühlkanal hineinragenden Vorsprüngen auf, die derart geformt und in dem ersten Kühlkanal voneinander räumlich versetzt angeordnet sind, dass diese in der durch den ersten Kühlkanal strömenden Kühlflüssigkeit Turbulenzen erzeugen. Diese Turbulenzen verbessern die Wärmeaufnahme durch die Kühlflüssigkeit, da sich keine Grenzschicht ausbilden kann. Die Vorsprünge vergrößern zudem die Wärmeübergangsfläche von dem Stator zu dem ersten Kühlkanal und steigern somit die Effizienz der Wärmeübertragung.

Vorzugsweise weist der Lagerschild einen zweiten Kühlkanal zum Durchleiten der Kühlflüssigkeit auf, der seinerseits eine zweite Öffnung aufweist, die an einer dem Stator zugewandten Seitenfläche ausgebildet ist und durch die die Kühlflüssigkeit in den zweiten Kühlkanal hinein- bzw. hinausströmen kann. Dabei sind die erste und die zweite Öffnung zueinander fluchtend ausgebildet und durch die zuvor beschriebene Dichtanordnung von der Umgebung bzw. von dem Hohlraum mediendicht abgedichtet.

### Kurzbeschreibung der Zeichnungen:

Im Folgenden werden beispielhafte Ausführungsformen der Erfindung bezugnehmend auf die beiliegenden Zeichnungen näher erläutert. Dabei zeigen:
- Figur 1: in einer schematischen Querschnittdarstellung eine elektrische Maschine gemäß einer Ausführungsform der Erfindung;
- Figur 2: in einer schematischen Querschnittdarstellung einen Abschnitt der in Figur 1 dargestellten elektrischen Maschine;
- Figur 3: in einer schematischen Querschnittdarstellung einen Abschnitt einer elektrischen Maschine gemäß eines Beispiels;
- Figur 4A, 4B, 4C: in jeweiligen schematischen Querschnittdarstellungen drei Beispiele einer Elastomerformdichtung der in Figur 3 dargestellten elektrischen Maschine;
- Figur 5A, 5B: in jeweiligen Perspektivdarstellungen jeweils einen Stator einer elektrischen Maschine gemäß zwei beispielhaften Ausführungsformen der Erfindung;
- Figur 6: in einer schematischen Querschnittdarstellung einen Abschnitt des in Figur 5A dargestellten Stators.

### Detaillierte Beschreibung der Zeichnungen:

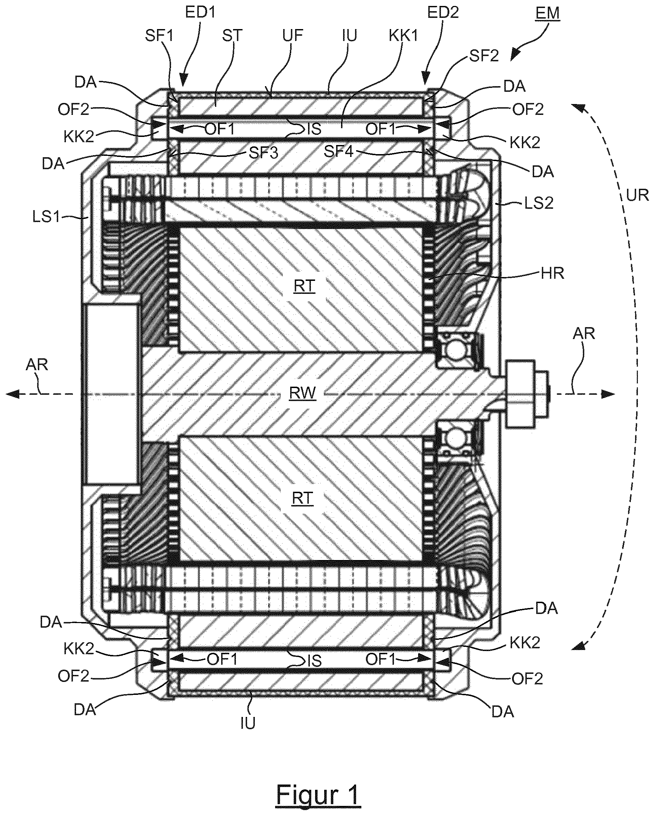

Figur 1 zeigt eine elektrische Maschine EM in einer schematischen Querschnittdarstellung.

Die elektrische Maschine EM umfasst einen Stator ST, der sich in einer axialen Richtung AR der elektrischen Maschine EM hohlzylinderförmig erstreckt und dabei einen zylinderförmigen Hohlraum HR umgibt. Die elektrische Maschine EM umfasst ferner zwei Lagerschilder LS1, LS2, die an einem der beiden axialen Enden des Stators ST angeordnet sind und den Hohlraum HR jeweils einseitig abschließen. Die elektrische Maschine EM umfasst ferner einen Rotor RT samt einer Rotorwelle RW, der in dem Hohlraum HR konzentrisch zu dem Stator ST angeordnet ist und über die Rotorwelle RW drehbar an den beiden Lagerschildern LS1, LS2 gelagert ist.

Der Stator ST ist vorzugsweise als ein Blechpaket aus einer Vielzahl von dünnen Dynamoblechen in axialer Stapelfolge ausgebildet. Dabei sind in den jeweiligen Blechschnitten der Dynamobleche entsprechende Aussparungen vorgesehen, die durch Ausstanzen ausgebildet werden. Beim Zusammenfügen der Dynamobleche zu dem Blechpaket werden die Ausspannungen zueinander fluchtend ausgerichtet, so dass diese nach dem Zusammenbau des Stators ST erste Kühlkanäle KK1 ausbilden, die sich jeweils in der axialen Richtung AR des Stators ST von dem einen axialen Ende ED1 zu dem anderen axialen Ende ED2 des Stators ST durchgehend erstrecken. Die ersten Kühlkanäle KK1 sind eingerichtet, beim Betrieb der elektrischen Maschine EM eine Kühlflüssigkeit zur Kühlung des Stators ST durchzuleiten. An jeweiligen Enden weisen die ersten Kühlkanäle KK1 jeweils eine Öffnung OF1 auf, durch die die Kühlflüssigkeit in die jeweiligen Kühlkanäle KK1 hinein- bzw. hinausströmen kann.

Der Stator ST weist ferner eine Isolierummantelung IU auf, die eine äußere Umfangsoberfläche UF sowie beide Seitenflächen SF1, SF2 des Stators ST hautartig bedeckt und mediendicht abdichtet.

An der Innenwand der jeweiligen ersten Kühlkanäle KK1 weist der Stator ST jeweils eine Isolierschicht IS auf, die die Innenwand der jeweiligen Kühlkanäle KK1 hautartig abdecken und die jeweiligen Kühlkanäle KK1 mediendicht abdichten.

Die Isolierummantelung IU und die Isolierschichten IS sind aus einer und derselben Gießmasse einstückig ausgebildet, die in einem Spritzgießvorgang auf bzw. an dem Stator ST spritzgegossen ist. Die Gießmasse besteht aus einem duroplastischen oder thermoplastischen Kunststoff, der thermisch leitet und elektrisch isoliert.

Die beiden Lagerschilder LS1, LS2 weisen jeweils eine Anzahl von zweiten Kühlkanälen KK2 und Kanalumlenkungen (in der Figur 1 nicht dargestellt) auf, wobei die Kanalumlenkungen die korrespondierenden zweiten Kühlkanäle KK2 miteinander strömungstechnisch verbinden.

An jeweiligen dem Stator ST zugewandten Enden weisen die zweiten Kühlkanäle KK2 jeweils eine Öffnung OF2 auf, durch die die Kühlflüssigkeit in die jeweiligen zweiten Kühlkanäle KK2 hinein- bzw. hinausströmen kann.

Die Öffnungen OF1 der ersten Kühlkanäle KK1 und die Öffnungen OF2 der korrespondierenden zweiten Kühlkanäle KK2 sind zueinander fluchtend ausgebildet, so dass die Kühlflüssigkeit von den jeweiligen ersten Kühlkanälen KK1 ungehindert zu den korrespondierenden zweiten Kühlkanälen KK2 und umgekehrt fließen kann. Dadurch bilden die ersten und die zweiten Kühlkanäle KK1, KK2 gemeinsam einen Kühlkreislauf zur Kühlung der elektrischen Maschine EM aus.

Die elektrische Maschine EM weist ferner vier Dichtanordnungen DA auf.

Die vier Dichtanordnungen DA sind jeweils in der axialen Richtung AR betrachtet kreisringförmig ausgebildet und zueinander und zu dem Hohlraum HR konzentrisch ausgebildet. Dabei sind zwei der Dichtanordnungen DA zwischen der linken Seitenfläche SF1 des Stators ST und einer korrespondierenden Seitenfläche SF3 des linken Lagerschildes LS1 und zwei weiteren Dichtanordnungen DA zwischen der rechten Seitenfläche SF2 des Stators ST und einer korrespondierenden Seitenfläche SF4 des rechten Lagerschildes LS2 angeordnet.

Von der Rotorwelle RW aus in radialer Richtung betrachtet sind jeweils eine der beiden linksseitigen und eine der beiden rechtsseitigen Dichtanordnungen DA zwischen dem Hohlraum HR und den ersten Kühlkanälen KK1 angeordnet. Diese Dichtanordnungen DA dichten den Hohlraum HR von den Kühlkanälen KK1, KK2 und der Umgebung mediendicht ab.

Das jeweils weitere der beiden linksseitigen und der beiden rechtsseitigen Dichtanordnungen DA sind von der Rotorwelle RW aus in der radialen Richtung betrachtet zwischen den ersten Kühlkanälen KK1 und der Umfangsfläche UF des Stators ST angeordnet. Diese beiden Dichtanordnungen DA dichten die Kühlkanäle KK1, KK2 von der Umgebung mediendicht ab.

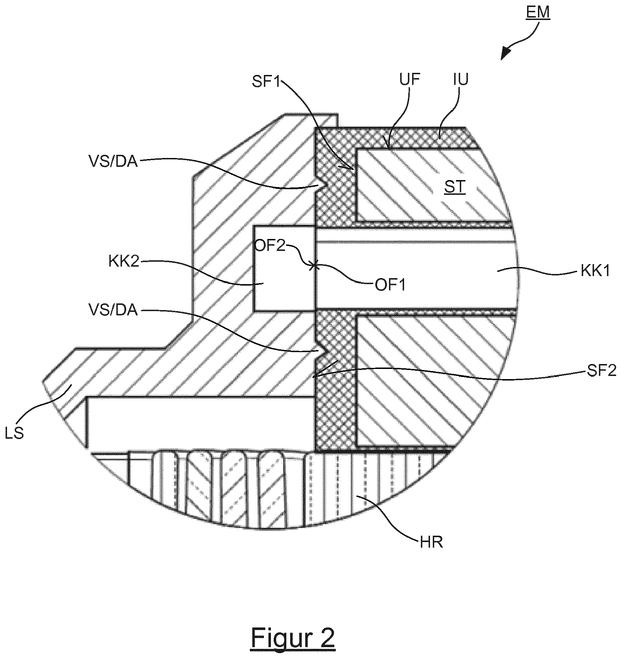

Die beiden Lagerschilder LS1, LS2 sind beispielsweise über Zuganker (in der Figur 1 nicht dargestellt) mit dem Stator ST verspannt. Dabei sind die beiden Enden der jeweiligen Zuganker stärker als die entsprechenden Schäfte ausgeführt, um eine verbesserte Sicherheit und Dauerfestigkeit sicherzustellen. Figur 2 zeigt einen Abschnitt der in Figur 1 dargestellten elektrischen Maschine EM, in der zwei der oben beschriebenen Dichtanordnungen DA detailliert dargestellt sind. In dieser Ausführungsform umfassen die Dichtanordnungen DA jeweils einen an den Seitenflächen SF2, SF4 der jeweiligen Lagerschilder LS1, LS2 ausgeformten, in der Umlaufsrichtung UR den Hohlraum HR kreisringförmig umlaufenden Vorsprung VS ausgebildet. Diese Vorsprünge VS weisen in deren jeweiligen Umlaufsrichtung UR betrachtet einen dreieckigen Querschnitt auf, der von den Seitenflächen SF2, SF4 der jeweiligen Lagerschilder LS1, LS2 in Richtung zu dem Stator ST spitz zulaufen. An beiden von den Seitenflächen SF2, SF4 der jeweiligen Lagerschilder LS1, LS2 abstehenden Seitenflächen sind die Vorsprünge VS schneidringartig ausgebildet.

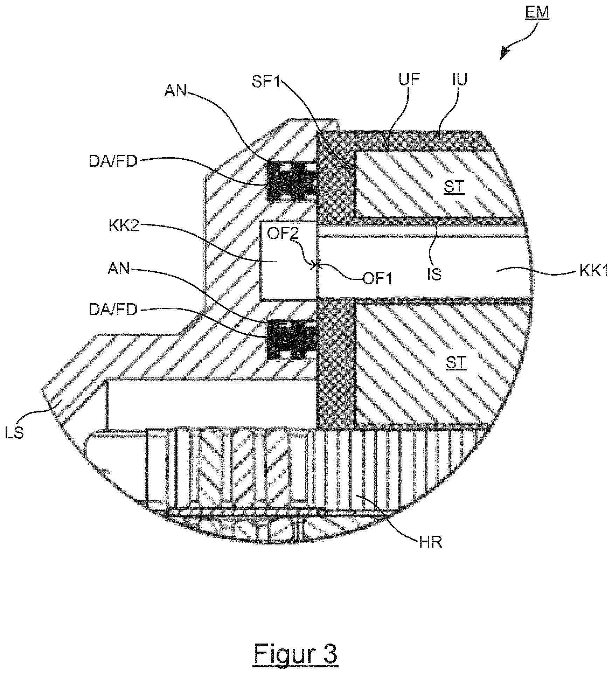

Beim Zusammenbau der elektrischen Maschine EM werden die jeweiligen Lagerschild LS1, LS2 in axialer Richtung AR seitlich an dem Stator ST angebracht und befestigt. Dabei schneiden die schneidringartig ausgebildeten Vorsprünge VS in die Isolierummantelung IU der Seitenflächen SF1, SF2 des Stators ST ein, wodurch sich die jeweiligen Vorsprünge VS in die Isolierummantelung IU hinein graben und gemeinsam mit der Isolierummantelung IU eine formschlüssige mediendichte Abdichtung für die Kühlkanäle KK1, KK2 bzw. für den Hohlraum HR ausbilden. Figur 3 zeigt einen Abschnitt einer elektrischen Maschine EM gemäß eines Beispiels. In diesem Beispiel umfassen die Dichtanordnungen DA jeweils eine Elastomerformdichtung FD, die eine Form eines O-Rings mit einem unregelmäßigen Querschnitt aufweist.

Die Elastomerformdichtungen FD sind in jeweils einer dafür vorgesehenen Ausnehmung AN angeordnet, die an dem jeweiligen Lagerschild LS1, LS2 ringförmig angeformt sind. Beim Zusammenbau der elektrischen Maschine EM werden die Elastomerformdichtungen FD von den jeweiligen Lagerschildern LS1, LS2 bzw. den Innenwänden der Ausnehmungen AN an den jeweiligen Lagerschildern LS1, LS2 in Richtung zu der Isolierummantelung IU (im Bereich der jeweiligen Seitenflächen SF1, SF2 des Stators ST) gedrückt und dichten dabei samt der Isolierummantelung IU die Kühlkanäle KK1, KK2 sowie den Hohlraum HR voneinander und von der Umgebung ab. Dadurch wird eine Abdichtung im Kraftnebenschluss hergestellt, die über ein hohes Abdichtpotential bei geringem Kraftbedarf verfügt.

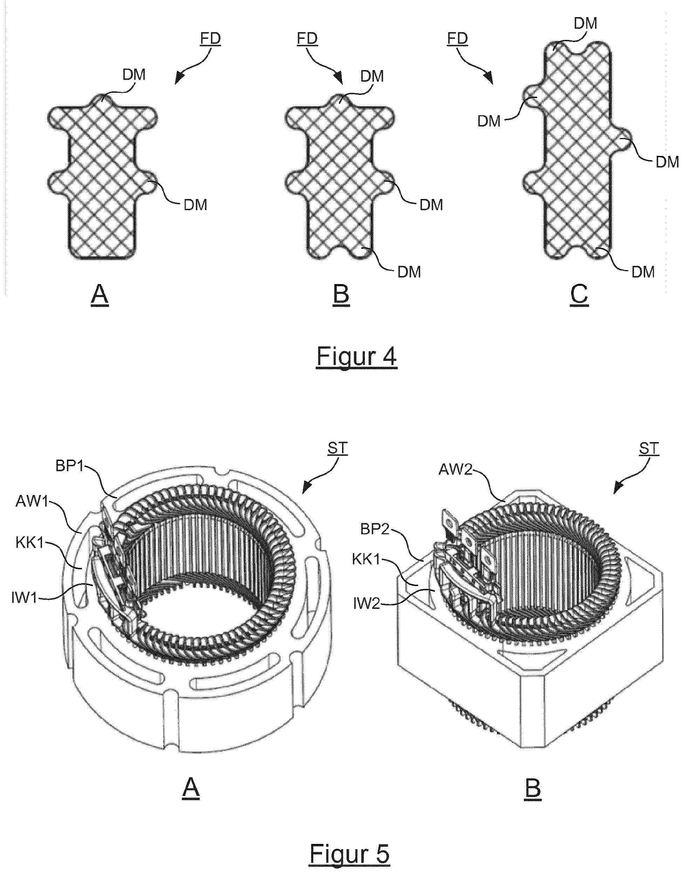

In Figuren 4A, 4B und 4C sind Querschnitte von drei Beispielen der Elastomerformdichtung FD abgebildet.

Der Querschnitt einer ersten Elastomerformdichtung FD in Figur 4A weist eine im Wesentlichen rechteckige Querschnittform auf, die an drei Seiten fünf domförmige Wölbungen DM aufweist, die sich entlang der Erstreckungsrichtung der jeweiligen Elastomerformdichtungen FD ringförmig erstrecken.

Der Querschnitt einer weiteren Elastomerformdichtung FD in Figur 4B weist ebenfalls eine im Wesentlichen rechteckige Querschnittform auf, die jedoch an vier Seiten unterschiedlich hohe domförmige Wölbungen DM aufweist, die sich entlang der Erstreckungsrichtung der jeweiligen Elastomerformdichtungen FD ringförmig erstrecken.

Der Querschnitt noch einer weiteren Elastomerformdichtung FD in Figur 4C weist eine längliche rechteckige Querschnittform auf, die ebenfalls an vier Seiten domförmigen Wölbungen DM aufweist, die sich entlang der Erstreckungsrichtung der jeweiligen Elastomerformdichtungen FD ringförmig erstrecken.

In Figuren 5A und 5B sind zwei Ausführungsformen des Stators ST der in Figur 1 beschriebenen elektrischen Maschine EM in jeweiligen Perspektivdarstellungen abgebildet.

Der in Figur 5A dargestellte Stator ST weist ein Blechpaket BP1 mit einem runden Außenumfang auf. Das Blechpaket BP1 umfasst eine äußere Wand AW1 und eine innere Wand IW1, wobei die beiden Wände AW1, IW1 zylindermantelförmig und zueinander koaxial ausgebildet sind. Zwischen den beiden Wänden AW1, IW1 weist der Stator ST Kühlkanäle KK1 auf, die in Form von Hohlzylindersektoren ausgebildet sind und sich in der axialen Richtung AR des Stators ST erstrecken.

Der in Figur 5B dargestellte Stator ST weist ein Blechpaket BP2 mit einem im Wesentlichen rechteckigen Außenumfang auf. Das Blechpaket BP2 umfasst eine äußere Wand AW2, die einen quaderförmigen Hohlraum umrandet, und eine hohlzylinderförmige innere Wand IW2, deren Querschnitt in der axialen Richtung AR des Stators ST betrachtet einen Inkreis des quadratischen Querschnitt der äußeren Wand AW2 ausbildet. Zwischen den beiden Wänden AW2, IW2 weist der Stator ST vier Kühlkanäle KK1 auf, die sich in der axialen Richtung AR des Stators ST erstrecken und deren axiale Querschnitte im Wesentlichen eine Dreiecksform oder eine Trapezform aufweisen.

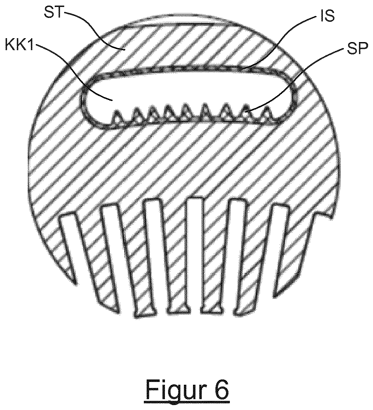

Figur 6 zeigt einen Querabschnitt des in Figur 5A dargestellten Stators, wobei ein Kühlkanal KK1 des Stators ST in dessen axialen Querschnitt dargestellt ist.

An der Innenwand des Kühlkanals KK1 weist der Stator ST die zuvor beschriebene Isolierschicht IS auf, die die Innenwand des Kühlkanals KK1 hautartig vollständig bedeckt und somit den Kühlkanal KK1 von dem Stator ST bzw. von dem massiven Körper des Blechpakets BP1 Stators ST sowie von der Umgebung mediendicht abdichtet.

Die Isolierschicht IS weist eine raue Oberflächenstruktur mit zahnförmigen Vorsprüngen SP auf, die in den ersten Kühlkanal KK1 hineinragend ausgebildet sind. Diese Vorsprünge SP erzeugen in der durch den ersten Kühlkanal KK1 fließenden Kühlflüssigkeit Turbulenzen, wodurch die Kühlflüssigkeit die Abwärme von dem Stator ST besser aufnehmen kann.

Die Herstellung des oben beschriebenen Stators ST umfasst vorzugsweise folgende Verfahrensschritte:
Es wird zunächst eine Vielzahl von Dynamoblechen aus einem dünnen Metallblech ausgestanzt. In Blechschnitten der Dynamobleche werden kreisförmige Aussparungen ausgestanzt, die über den Umfang der jeweiligen Dynamobleche verteilt angeordnet sind. Zudem werden an Innenkanten der jeweiligen Dynamobleche Nutausschnitte ausgestanzt, die ebenfalls über den Umfang der jeweiligen Dynamobleche verteilt angeordnet sind.

Die Dynamobleche werden anschließend aufeinander gestapelt und zu einem Blechpaket BP1, BP2 zusammengebaut. Beim Aufeinanderstapeln werden die Dynamobleche zueinander ausgerichtet, so dass die korrespondierenden Aussparungen zueinander fluchten und somit die zuvor genannten ersten Kühlkanäle KK1 ausbilden, die über die gesamte Länge des Blechpakets BP1, BP2 durchgehend axial verlaufen. Die Nutausschnitte bilden Nuten zur Aufnahme von Wicklungen aus.

Die vorgesehene Spritzgießtechnik zur Isolierung des Blechpaketes BP1, BP2 erspart das Paketieren, wie z.B. durch Schweißen, des Blechpaketes BP1, BP2.

Das Blechpaket BP1, BP2 wird mit einer Gießmasse aus einem duroplastischen oder thermoplastischen Kunststoff in einem Spritzgießvorgang überzogen. Nach dem Erhärten bildet die Gießmasse die zuvor beschriebene Isolierummantelung IU für das Blechpaket BP1, BP2 bzw. den Stator ST und die zuvor beschriebene Isolierschicht IS für die ersten Kühlkanäle KK1 aus. Die Gießmasse, die die Nuten bedeckt, bildet nach dem Erhärten die Nutisolierung aus, wodurch Nutisolationspapier entfällt.

Danach werden in einer dem Fachmann bekannten Weise Leiterstäbe in die Nuten eingesteckt und entsprechend dem Wickelschnitt verschränkt und zu Wicklungen zusammengeschweißt.

Anschließend werden die beiden Lagerschilder LS1, LS2, die mit den zuvor beschriebenen Dichtanordnungen DA versehen sind, seitlich an dem Stator ST angebracht und mit dem Stator ST fest verbunden. Dabei bildet die Dichtanordnung DA in der zuvor beschriebenen Weise mit der Isolierummantelung IU die formschlüssige mediendichte Abdichtung für die Kühlkanäle KK1 bzw. den Stator ST aus.

## Patentansprüche

1. Gehäuselose elektrische Maschine (EM), umfassend:
- einen Stator (ST), innerhalb dessen sich ein Hohlraum (HR) befindet;
- zumindest einen Lagerschild (LS1, LS2), der an eine Seitenfläche (SF1) des Stators (ST) angeordnet ist und den Hohlraum (HR) einseitig abgrenzt;
**dadurch gekennzeichnet, dass** die gehäuselose elektrische Maschine zudem umfasst,
- eine Isolierummantelung (IU), die eine äußere Umfangsoberfläche (UF) und zumindest die Seitenfläche (SF1) des Stators (ST) mediendicht abdichtet;
- zumindest eine Dichtanordnung (DA), die zwischen der Isolierummantelung (IU) und dem zumindest einen Lagerschild (LS1, LS2) angeordnet ist und den Hohlraum (HR) von der Umgebung mediendicht abdichtet, wobei die Dichtanordnung (DA) einen ersten Vorsprung (VS) umfasst, der an dem zumindest einen Lagerschild (LS1, LS2) sich in der Umfangsrichtung (UR) des Hohlraums (HR) erstreckend ausgebildet ist und in die Isolierummantelung (IU) hineinragt und somit den Hohlraum (HR) von der Umgebung mediendicht abdichtet.

2. Elektrische Maschine (EM) nach Anspruch 1, wobei die Isolierummantelung (IU) größtenteils, insbesondere vollständig, aus einem wärmeleitenden Kunststoff, wie z. B. einem thermoplastischen oder duroplastischen Kunststoff, besteht.

3. Elektrische Maschine (EM) nach einem der vorangehenden Ansprüche, wobei der Stator (ST) einen ersten Kühlkanal (KK1) zum Durchleiten einer Kühlflüssigkeit mit einer ersten Öffnung (OF1) zum Zuführen und/oder Abführen der Kühlflüssigkeit aufweist, wobei die Dichtanordnung (DA) den ersten Kühlkanal (KK1) bzw. die erste Öffnung (OF1) von der Umgebung mediendicht abdichtet.

4. Elektrische Maschine (EM) nach Anspruch 3, wobei der Stator (ST) an einer Innenwand (IW) des ersten Kühlkanals (KK1) eine Isolierschicht (IS) aufweist, wobei die Isolierschicht (IS) den Kühlkanal (KK1) von der Umgebung mediendicht abgedichtet.

5. Elektrische Maschine (EM) nach Anspruch 4, wobei die Isolierschicht (IS) und die Isolierummantelung (IU) in einem und demselben Spritzgießvorgang ausgebildet sind.

6. Elektrische Maschine (EM) nach Anspruch 4 oder 5, wobei die Isolierschicht (IS) und die Isolierummantelung (IU) einstückig ausgebildet sind.

7. Elektrische Maschine (EM) nach einem der Ansprüche 4 bis 7, wobei die Isolierschicht (IS) eine Anzahl von in den ersten Kühlkanal (KK1) hineinragenden Vorsprüngen (SP) aufweist, die zur Erzeugung von Turbulenzen in der durch den Kühlkanal (KK) fließenden Kühlflüssigkeit ausgeführt sind.

8. Elektrische Maschine (EM) nach einem der Ansprüche 3 bis 7, wobei der zumindest eine Lagerschild (LS1, LS2) einen zweiten Kühlkanal (KK2) zum Durchleiten der Kühlflüssigkeit mit einer zweiten Öffnung (OF2) zum Zuführen und/oder Abführen der Kühlflüssigkeit aufweist, wobei die erste Öffnung (OF1) und die zweite Öffnung (OF2) zueinander fluchtend ausgebildet sind und durch die Dichtanordnung (DA) von der Umgebung mediendicht abgedichtet sind.

## Claims

1. Unenclosed electrical machine (EM), comprising:
- a stator (ST), within which there is a cavity (HR);
- at least one end shield (LS1, LS2), which is arranged on a side face (SF1) of the stator (ST) and delimits the cavity (HR) on one side;
**characterized in that** the unenclosed electrical machine also comprises,
- an insulating sheath (IU), which seals off an outer circumferential surface (UF) and at least one side face (SF1) of the stator (ST) in a media-tight manner;
- at least one sealing arrangement (DA), which is arranged between the insulating sheath (IU) and the at least one end shield (LS1, LS2), and seals off the cavity (HR) from the surroundings in a media-tight manner,
wherein the sealing arrangement (DA) comprises a first projection (VS), which is realized so as to extend on the at least one end shield (LS1, LS2) in the circumferential direction (UR) of the cavity (HR), and projects into the insulating sheath (IU) and thus seals off the cavity (HR) from the surroundings in a media-tight manner.

2. Electrical machine (EM), according to Claim 1, wherein the insulating sheath (IU) is composed largely, in particular entirely, of a thermally conductive plastic such as, for example, a thermoplastic or thermosetting material.

3. Electrical machine (EM) according to any one of the preceding claims, wherein the stator (ST) has a first cooling channel (KK1) for transporting a cooling fluid, having a first opening (OF1) for supplying and/or removing the cooling fluid, wherein the sealing arrangement (DA) seals off the first cooling channel (KK1), or the first opening (OF1), from the surroundings in a media-tight manner.

4. Electrical machine (EM) according to Claim 3, wherein the stator (ST) has, on an inner wall (IW) of the first cooling channel (KK1), an insulating layer (IS), wherein the insulating layer (IS) seals off the cooling channel (KK1) from the surroundings in a media-tight manner.

5. Electrical machine (EM) according to Claim 4, wherein the insulating layer (IS) and the insulating sheath (IU) are realized in one and the same injection molding process.

6. Electrical machine (EM) according to Claim 4 or 5, wherein the insulating layer (IS) and the insulating sheath (IU) are realized as a single piece.

7. Electrical machine (EM) according to any one of Claims 4 to 7, wherein the insulating layer (IS) has a number of projections (VS) projecting into the first cooling channel (KK1), which are designed to generate turbulences in the cooling fluid flowing through the cooling channel (KK).

8. Electrical machine (EM) according to any one of Claims 3 to 7, wherein the at least one end shield (LS1, LS2) has a second cooling channel (KK2) for transporting the cooling fluid, having a second opening (OF2) for supplying and/or removing the cooling fluid, wherein the first opening (OF1) and the second opening (OF2) are realized in alignment with each other, and are sealed off from the surroundings in a media-tight manner by the sealing arrangement (DA).

## Revendications

1. Machine électrique (EM) sans carter, comprenant :
- un stator (ST) à l'intérieur duquel se trouve un espace creux (HR) ;
- au moins un flasque (LS1, LS2) qui est disposé au niveau d'une surface latérale (SF1) du stator (ST) et qui délimite l'espace creux (HR) unilatéralement ;
**caractérisée en ce que** la machine électrique sans carter comprend en outre
- une enveloppe isolante (IU) qui réalise l'étanchéité aux fluides d'une surface circonférentielle extérieure (UF) et d'au moins la surface latérale (SF1) du stator (ST) ;
- au moins un arrangement d'étanchéité (DA) qui est disposé entre l'enveloppe isolante (IU) et l'au moins un flasque (LS1, LS2) et réalise l'étanchéité aux fluides de l'espace creux (HR) par rapport à l'environnement, l'arrangement d'étanchéité (DA) comportant une première partie saillante (VS) qui est configurée pour s'étendre au niveau de l'au moins un flasque (LS1, LS2) dans la direction circonférentielle (UR) de l'espace creux (HR) et qui pénètre dans l'enveloppe isolante (IU) et réalise ainsi l'étanchéité aux fluides de l'espace creux (HR) par rapport à l'environnement.

2. Machine électrique (EM) selon la revendication 1, l'enveloppe isolante (IU) se composant en majeure partie, notamment entièrement, d'une matière plastique thermoconductrice comme, par exemple, un thermoplastique ou une matière plastique thermodurcissable.

3. Machine électrique (EM) selon l'une des revendications précédentes, le stator (ST) possédant un premier canal de refroidissement (KK1) servant au passage d'un liquide de refroidissement et comportant une première ouverture (OF1) destinée à l'arrivée et/ou à l'évacuation du liquide de refroidissement, l'arrangement d'étanchéité (DA) réalisant l'étanchéité aux fluides du premier canal de refroidissement (KK1) ou de la première ouverture (OF1) par rapport à l'environnement.

4. Machine électrique (EM) selon la revendication 3, le stator (ST) possédant une couche isolante (IS) au niveau d'une paroi interne (IW) du premier canal de refroidissement (KK1), la couche isolante (IS) réalisant l'étanchéité aux fluides du premier canal de refroidissement (KK1) par rapport à l'environnement.

5. Machine électrique (EM) selon la revendication 4, la couche isolante (IS) et l'enveloppe isolante (IU) étant formées en une seule et même opération de moulage par injection.

6. Machine électrique (EM) selon la revendication 4 ou 5, la couche isolante (IS) et l'enveloppe isolante (IU) étant réalisées d'un seul tenant.

7. Machine électrique (EM) selon l'une des revendications 4 à 7, la couche isolante (IS) possédant un certain nombre de parties saillantes (SP) qui pénètrent dans le premier canal de refroidissement (KK1), lesquelles sont exécutées pour générer des turbulences dans le liquide de refroidissement qui s'écoule à travers le canal de refroidissement (KK).

8. Machine électrique (EM) selon l'une des revendications 3 à 7, l'au moins un flasque (LS1, LS2) possédant un deuxième canal de refroidissement (KK2) servant au passage du liquide de refroidissement et comportant une deuxième ouverture (OF2) destinée à l'arrivée et/ou à l'évacuation du liquide de refroidissement, la première ouverture (OF1) et la deuxième ouverture (OF2) étant réalisées dans l'alignement l'une de l'autre et étant rendues étanches aux fluides par rapport à l'environnement par l'arrangement d'étanchéité (DA).
